# EUROPÄISCHE PATENTSCHRIFT

(11) **EP 3 151 304 B1**
(45) Veröffentlichungstag und Bekanntmachung des Hinweises auf die Patenterteilung: **25.07.2018**
(21) Anmeldenummer: 15188137.2
(22) Anmeldetag: 02.10.2015
(51) Int. Cl.: H01M 2/02, H01M 4/13, H01M 4/66, H01M 10/04, H01M 4/80, H01M 10/052, H01M 10/058, H01M 4/131, H01M 10/0585

(54) **KNOPFZELLE AUF LITHIUM-IONEN-BASIS**
BUTTON CELL ON A LITHIUM ION BASIS
PILE BOUTON A BASE DE LITHIUM-ION

(43) Veröffentlichungstag der Anmeldung: 05.04.2017
(73) Patentinhaber: VARTA Microbattery GmbH, 73479 Ellwangen Jagst (DE)
(72) Erfinder: Fischer, Claus-Christian, 73479 Ellwangen (DE); Gaugler, Winfried, 73479 Ellwangen-Eigenzell (DE); Kilibarda, Goran, 73434 Aalen (DE); Kreidler, Bernd, 73479 Ellwangen (DE); Siwek, Hanna, 73479 Ellwangen (DE)
(74) Vertreter: Patentanwaltskanzlei Cartagena

(56) Entgegenhaltungen:
- EP-A1- 1 011 163
- US-A1- 2008 076 021
- US-A1- 2013 040 205

## Beschreibung

Die vorliegende Erfindung betrifft eine Knopfzelle auf Lithium-Ionen-Basis.

Bei der Entladung einer elektrochemischen Zelle findet eine energieliefernde chemische Reaktion statt, welche sich aus zwei elektrisch miteinander gekoppelten aber räumlich voneinander getrennten Teilreaktionen zusammensetzt. Eine bei vergleichsweise niedrigerem Redoxpotential stattfindende Teilreaktion läuft an der negativen Elektrode ab, eine bei vergleichsweise höherem Redoxpotential an der positiven Elektrode. Bei der Entladung werden an der negativen Elektrode durch einen Oxidationsprozess Elektronen freigesetzt, resultierend in einem Elektronenstrom übereinen äußeren Verbraucher zur positiven Elektrode, von der eine entsprechende Menge an Elektronen aufgenommen wird. An der positiven Elektrode findet also ein Reduktionsprozess statt. Zeitgleich kommt es zu einem der Elektrodenreaktion entsprechenden lonenstrom innerhalb der Zelle. Dieser lonenstrom wird durch einen ionisch leitenden Elektrolyten gewährleistet. In sekundären Zellen ist diese Entladereaktion reversibel, es besteht also die Möglichkeit, die bei der Entladung erfolgte Umwandlung chemischer Energie in elektrische umzukehren. Werden in diesem Zusammenhang die Begriffe Anode und Kathode benutzt, benennt man die Elektroden in der Regel entsprechend ihrer Entladefunktion. Die negative Elektrode ist in solchen Zellen also die Anode, die positive Elektrode die Kathode.

Eine besonders bekannte Ausführungsform einer elektrochemischen Zelle ist die Knopfzelle. Eine Knopfzelle weist üblicherweise ein zylindrisches Gehäuse aus einem positiv gepolten und einem negativ gepolten metallischen Gehäusehalbteil auf, dessen Höhe kleiner als sein Durchmesser ist. In dem Gehäuse können unterschiedliche elektrochemische Systeme enthalten sein. Sehr verbreitet sind Knopfzellen auf Basis von Nickel-Metallhydrid-Systemen, wie sie beispielsweise in der EP 1011163 A1 beschrieben sind, und auf Lithium-Ionen-Basis, wie sie beispielsweise in der US 2013/0040205 A1 beschrieben sind. Diese sind in aller Regel wiederaufladbar.

Vor allem die Knopfzellen auf Lithium-Ionen-Basis weisen sehr hohe Energiedichten auf. Bei diesen Zellen werden im Rahmen der erwähnten Lade- und Entladevorgänge Lithium-Ionen in Elektroden ein- oder ausgelagert. Sehr hohe Strombelastbarkeiten erreichen Knopfzellen auf Lithium-Ionen-Basis, die an Stelle klassischer Masseelektroden einen Verbundkörper in Form eines Stapels (stack) aus mehreren flachen Einzelzellen oder alternativ eine Einzelzelle in gewickelter Form umfassen. Die Bildung von Stapeln aus mehreren flachen Einzelzellen ist allerdings aufwendig, weil die Einzelzellen schichtübergreifend miteinander verbunden werden müssen. Entsprechende elektrische Kontaktierungen benötigen darüber hinaus Platz und schaffen ein Totvolumen, was die Energiedichte entsprechender Zellen herabsetzt.

Beispiele für Knopfzellen mit Einzelzellen in gewickelter Form finden sich z.B. in der DE 10 2009 060 800 A1. Beschrieben werden in dieser Anmeldung Einzelzellen in Form von zylindrischen Wickeln. Aus den Stirnseiten der Wickel ragen Ableiterstreifen, die mit einem Metallgehäuse elektrisch verbunden werden. Derartige Wickel lassen sich allerdings nur ab einer bestimmten Mindestdicke problemlos herstellen. Die Herstellung von Wickeln mit einer Dicke von weniger als 5 mm ist schwierig. Darüber hinaus lassen sich solch dünne Wickel auch nur unter Problemen in üblichen Zellgehäusen verbauen.

In der Folge sind Knopfzellen mit hoher Leistungsfähigkeit und einer geringen Bauhöhe von ≤ 5 mm nur schlecht verfügbar.

Der vorliegenden Erfindung lag die Aufgabe zugrunde, Knopfzellen mit einer Bauhöhe ≤ 5 mm bereitzustellen, die eine hohe Energiedichte aufweisen und die hohe Ströme abgeben können.

Diese Aufgabe wird gelöst durch die Knopfzelle mit den Merkmalen des Anspruchs 1 sowie das Verfahren mit den Merkmalen des Anspruchs 9. Bevorzugte Ausführungsformen der erfindungsgemäßen Knopfzelle sind in den abhängigen Ansprüchen 2 bis 8 angegeben. Bevorzugte Ausführungsformen der erfindungsgemäßen Knopfzelle sind in den abhängigen Ansprüchen 10 bis 13 angegeben Der Wortlaut sämtlicher Ansprüche wird hiermit durch Bezugnahme zum Inhalt der vorliegenden Beschreibung gemacht.

Die erfindungsgemäße Knopfzelle ist eine Knopfzelle auf Lithium-Ionen-Basis. In Übereinstimmung mit den obigen Ausführungen bedeutet das, dass sie Elektroden aufweist, in die bei Lade- und Entladevorgänge Lithium-Ionen ein- und ausgelagert werden. Sie umfasst stets
- ein flüssigkeitsdicht verschlossenes Gehäuse aus einem positiv gepolten metallischen Gehäusehalbteil und einem negativ gepolten metallischen Gehäusehalbteil, die mittels einer elektrisch isolierenden Dichtung voneinander getrennt sind,
- eine positive Elektrode, die innerhalb des Gehäuses angeordnet ist und in elektrischem Kontakt mit dem positiv gepolten Gehäusehalbteil steht,
- eine negative Elektrode, die innerhalb des Gehäuses angeordnet ist und in elektrischem Kontakt mit dem negativen gepolten Gehäusehalbteil steht, und
- einen ionenleitfähigen Separator, der in dem Gehäuse zwischen der positiven und der negativen Elektrode angeordnet ist.

Besonders zeichnet sich die erfindungsgemäße Knopfzelle dadurch aus, dass
- die positive Elektrode einen metallischen Stromableiter umfasst,
- der metallische Stromableiter ein poröses, dreidimensionales Gebilde ist,
- die Poren des das poröse Gebildes mit einem elektrochemischem Aktivmaterial der positiven Elektrode befüllt sind und
- das poröse Gebilde durch Verschweißung direkt mit dem positiv gepolten Gehäusehalbteil verbunden ist.

Aus der Verwendung des porösen, dreidimensionalen, mit dem positiven Gehäusehalbteil durch Verschweißung verbundenen Stromableiters ergab sich ein überraschend deutlicher Anstieg der elektrischen Leistungsfähigkeit der beanspruchten Knopfzellen. Es wird vermutet, dass diese daraus resultiert, dass das in den Poren des dreidimensionalen Stromableiters befindliche elektrochemische Aktivmaterial der positiven Elektrode im Mittel einen deutlich verkürzten Abstand zum Stromableiter aufweist. Aufgrund dieser verkürzten Anbindung sind verkürzte elektrische bzw. ionische Diffusionswege realisierbar, wodurch die Leitfähigkeit der positiven Elektrode deutlich zunimmt. Weiterhin wird die Elektrode durch den Stromableiter auch mechanisch stabilisiert. Dies spielt besonders bei der Verwendung von Aktivmaterialien mit hoher Aufnahmefähigkeit für Lithium eine Rolle: Jede Lithium-Aufnahme bzw. Abgabe geht mit Änderungen des Volumens der beteiligten Aktivmaterialpartikel einher. Diese fortwährende mechanische Belastung führt zu Degenerationserscheinungen, welche sich in einer Abnahme der Zellkapazität äußern. Die Verwendung des porösen, dreidimensionalen Stromableiters wirkt dem entgegen.

Ein weiterer Vorteil resultiert aus der Anbindung des dreidimensionalen und porösen Stromabnehmers durch Verschweißung direkt an das Gehäuse. Dadurch können Verluste aufgrund einer schlechten Kontaktierung ausgeschlossen werden.

Besonders bevorzugt ist das dreidimensionale Gebilde aus einem offenporigen Schaum, einem Vlies, einem Gitter oder einem Netz gebildet oder es besteht aus einem dieser Materialien. Zur Verwendung als Ableiter geeignete offenporige Metallschäume und Vliese sind aus dem Stand der Technik bekannt. Beispielhaft wird in diesem Zusammenhang auf die EP 0 658 949 A1 verwiesen, in der geeignete Metallschäume und Vliese beschrieben sind. Metallische Gitter und Netze sind als Ableiter im Batteriebereich ebenfalls bereits bekannt. Beispielhaft wird in diesem Zusammenhang auf die DE 198 57 638 A1 verwiesen. Geeignete Netze oder Gitter sind beispielsweise Streckmetalle. Streckmetalle sind dünne Metallbänder bzw. Metallfolien, die zunächst mit einer Vielzahl von unterbrochenen Einschnitten versehen werden, um anschließend quer zur Längsrichtung dieser Einschnitte gestreckt, also gedehnt, zu werden, was zur Folge hat, dass die vorher zwischen den Einschnitten liegenden Metallstreifen zu einem Gitterwerk gestreckt werden.

Wenn im Rahmen der vorliegenden Erfindung von Poren des porösen Gebildes die Rede ist, so sind hierunter auch die Zwischenräume zu verstehen, die zwischen den Stegen eines Gitters oder eines Netzes oder den Fasern eines Vlieses existieren. Entsprechend ist unter der Porosität des Gebildes schlichtweg das Verhältnis des Hohlraumvolumens aller in dem Gebilde enthaltenen Poren und/oder Zwischenräume zum Gesamtvolumen des Gebildes zu verstehen.

Besonders bevorzugt weist das Gebilde eine Porosität im Bereich von 20 % bis 99 %, insbesondere im Bereich von 80 % bis 98 %, auf. Die Poren und/oder Zwischenräume weisen in bevorzugten Ausführungsformen maximale Durchmesser im Bereich von 10 µm bis 1500 µm, besonders bevorzugt im Bereich von 10 µm bis 1000 µm, insbesondere im Bereich von 10 µm bis 250 µm, auf.

Sowohl die genannten Schäume und Vliese als auch die Gitter und Metallnetze sind in aller Regel als Band oder Tafelmaterial erhältlich. Aus diesen Materialien lassen sich die für die erfindungsgemäße Knopfzelle benötigten Gebilde heraustrennen, beispielsweise mittels eines Stanz- oder Schneidvorgangs. Besonders bevorzugt weist ein so gewonnenes Gebildes die Form einer zylindrischen Scheibe auf, insbesondere einer Scheibe mit einem Durchmesser im Bereich von 3 mm bis 100 mm, vorzugsweise im Bereich von 3 mm bis 30 mm, sowie einer Dicke im Bereich von 20 µm und 10 mm, bevorzugt im Bereich von 20 µm bis 5 mm, insbesondere im Bereich von 50 µm bis 5 mm, besonders bevorzugt im Bereich von 100 µm und 5 mm. Die Dimensionen des Gebildes sind auf die Dimensionen des Gehäuses der erfindungsgemäßen Knopfzelle abgestimmt.

Das poröse Gebilde besteht erfindungsgemäß besonders bevorzugt aus Aluminium oder aus einer Aluminiumlegierung.

Das Gehäuse der erfindungsgemäßen Knopfzelle kann ebenfalls aus Aluminium oder aus einer Aluminiumlegierung bestehen. Gleichsam kann es aber auch aus Stahl oder Eisenblech bestehen oder zumindest eine Lage aus Stahl- oder Eisenblech beinhalten. Besonders bevorzugt besteht das positiv gepolte Gehäusehalbteil aus Aluminium oder aus einer Aluminiumlegierung, während das negativ gepolte Gehäusehalbteil aus Stahl- oder Eisenblech besteht oder zumindest eine Lage aus einem dieser Materialien beinhaltet.

Es ist bevorzugt, dass das positiv und das negativ gepolte Gehäusehalbteil formschlüssig miteinander verbunden sind und dass es einer Deformation des negativ gepolten Gehäusehalbteils bedarf, um die beiden Gehäusehalbteile voneinander zu trennen.

In besonders bevorzugten Ausführungsformen sind beide Gehäusehalbteile becherförmig ausgebildet und weisen jeweils einen Becherboden, eine umlaufende Becherwand, einen Becherrand mit einer endständigen Schnittkante und eine von dem Becherrand definierte Öffnung auf. In dieser Ausführungsform wird die formschlüssige Verbindung bevorzugt realisiert, indem eines der Gehäusehalbteile mit dem Becherrand voran in das andere Gehäusehalbteil eingeschoben wird (bevorzugt wird vor dem Einschub auf die Außenseite der Becherwand des einzuschiebenden becherförmigen Gehäusehalbteils eine geeignete Dichtung aufgezogen) und anschließend der Öffnungsrand letzteren Gehäusehalbteils so weit radial nach innen gedrückt oder eingezogen wird, bis der gewünschte Formschluss besteht. Diesen Vorgang bezeichnet man gewöhnlich als Bördelung.

Alternativ lässt sich eine formschlüssige Verbindung wie folgt realisieren: In einem ersten Schritt wird der Becherrand eines becherförmigen Gehäusehalbteils radial nach außen umgebogen, insbesondere so, dass der umgebogene Rand einen Winkel von 90° zur umlaufenden Becherwand einnimmt. Das so verformte Gehäusehalbteil weist im Ergebnis einen hutartigen Querschnitt auf, wobei der umgebogene Rand die Hutkrempe bildet. Mit der Krempe voran wird das Gehäusehalbteil anschließend mittig auf eine Scheibe, beispielsweise aus Stahl- oder Eisenblech, aufgesetzt, welche durch Umformung zu einem napfförmigen Gehäusehalbteil verarbeitet wird. Hierzu wird der Rand der Scheibe radial nach innen - über den umgebogenen Becherrand des becherförmigen Gehäusehalbteils - umgeschlagen, so dass sich ein umlaufender Flansch ausbildet. In diesem wird der umgebogene Becherrand des becherförmigen Gehäusehalbteils U-förmig von dem umgebogenen Rand des napfförmigen Gehäusehalbteils umschlossen. Vorzugsweise vor dem Aufsetzen auf die Scheibe wird auf den umgebogenen Becherrand des becherförmigen Gehäusehalbteils eine geeignete Dichtung aufgezogen.

Die erfindungsgemäße Knopfzelle weist bevorzugt eine Höhe ≤ 5 mm, insbesondere ≤ 4 mm, auf.

In bevorzugten Ausführungsformen umfasst auch die negative Elektrode der erfindungsgemäßen Knopfzelle einen metallischen Stromableiter, insbesondere einen Stromableiter aus Kupfer oder aus einer Kupferlegierung. Bei diesem Stromableiter kann es sich ebenfalls um einen Stromableiter in Form eines Schaums, eines Vlieses oder in Form eines Netzes oder Gitters handeln.

In bevorzugten Ausführungsformen ist der metallische Stromableiter für die negative Elektrode ebenfalls durch Verschweißung mit dem Gehäuse, konkreter, dem negativ gepolten Gehäusehalbteil, verbunden. Seine sonstige strukturelle Beschaffenheit gleicht in bevorzugten Ausführungsformen der des Stromableiters für die positive Elektrode.

Die erfindungsgemäße Knopfzelle weist bevorzugt ein flüssigkeitsdicht verschlossenes Gehäuse auf. Das bedeutet, dass im normalen Betrieb Flüssigkeiten weder aus dem Gehäuse austreten noch in das Gehäuse eindringen können.

Zur Herstellung der erfindungsgemäßen Knopfzelle, nach dem Anspruch 9, kann man sich des nachstehend beschriebenen Verfahrens bedienen. Das Verfahren umfasst stets die folgenden Schritte:
- Bereitstellung einer positiven Elektrode in einem positiv gepolten Gehäusehalbteil
- Bereitstellung einer negativen Elektrode in einem negativ gepolten Gehäusehalbteil
- Bereitstellung einer elektrisch isolierenden Dichtung
- Bereitstellung eines ionenleitfähigen Separators und
- Zusammenfügen dieser Bauteile zu der herzustellenden Knopfzelle.

Das erfindungsgemäße Verfahren zeichnet sich dadurch aus, dass die positive Elektrode einen metallischen Stromableiter in Form eines porösen, dreidimensionalen Gebildes umfasst, der mit dem positiv gepolten Gehäusehalbteil durch Verschweißung verbunden ist.

Die Verschweißung erfolgt besonders bevorzugt mittels Widerstandsschweißen oder mittels eines Lasers. Die Nutzung eines Lasers zum Verschweißen eines Knopfzellengehäuses mit einem metallischen Ableiter ist beispielsweise aus der DE 10 2009 060 800 A1 bereits bekannt. Die dort beschriebene Vorgehensweise lässt sich grundsätzlich auch im Rahmen der vorliegenden Erfindung einsetzen. Beim Widerstandsschweißen werden zwei metallische Substrate miteinander in Kontakt gebracht. Im Kontaktbereich werden dann zwei Elektroden angesetzt, zwischen denen ein Strom fließt, der die Substrate im Kontaktbereich zum Schmelzen bringt. Es resultiert ein entsprechender Schweißpunkt oder eine Schweißnaht.

Zur Bereitstellung der positiven Elektrode in dem positiv gepolten Gehäusehalbteil wird ein geeignetes elektrochemisches Aktivmaterial in das Gebilde eingebracht. Dies geschieht bevorzugt, nachdem das poröse Gebilde mit dem positiv gepolten Gehäusehalbteil bereits verschweißt wurde. Das elektrochemische Aktivmaterial kann trocken in das poröse Gebilde eingebracht werden. Alternativ ist es aber auch möglich, das elektrochemische Aktivmaterial in Form einer Suspension in das poröse Gebilde einzubringen. Im letzteren Fall muss nach dem Einbringen in aller Regel das Suspensionsmittel entfernt werden. Hierzu kann das poröse Gebilde gegebenenfalls erwärmt werden.

Zur Bereitstellung der negativen Elektrode kann im einfachsten Fall metallisches Lithium in ein passendes Gehäusehalbteil eingepresst werden. Es ist aber auch möglich, analog zur Bereitstellung der positiven Elektrode zu verfahren, also ein Gehäusehalbteil mit einem darin eingeschweißten, als Stromableiter dienenden, metallischen, porösen Gebilde bereitzustellen und elektrochemisches Aktivmaterial trocken oder in Form einer Suspension in das poröse Gebilde einzubringen.

Als elektrochemische Aktivmaterialien können bei der Herstellung der erfindungsgemäßen Knopfzelle grundsätzlich alle Materialien verwendet werden, die Lithium-Ionen aufnehmen und wieder abgeben können. Stand der Technik sind diesbezüglich für die positive Elektrode insbesondere Lithiummetalloxide wie Lithiumkobaltoxid (LiCoO₂), Lithiumeisenphosphat (LiFePO₄), Lithiummanganoxid (LiMn₂O4) oder beispielsweise LiN_{1/3}Mn_{1/3}Co_{1/3}O₂ oder LiMnPO₄. Für die negative Elektrode umfassen die zu diesem Zeitpunkt industriell verwendeten Aktivmaterialien neben dem erwähnten metallischem Lithium auch insbesondere Partikel auf Kohlenstoffbasis wie graphitischer Kohlenstoff oder zur Interkalation von Lithium befähigte nicht-graphitische Kohlenstoffmaterialien. Weiterhin können auch metallische oder halbmetallische Materialien zum Einsatz kommen, die mit Lithium legierbar sind oder intermetallische Phasen bilden. Geeignete Metalle sind beispielsweise die Elemente Zinn, Antimon und Silizium. Sämtliche elektrochemischen Aktivmaterialien kommen in der Regel in Partikelform zum Einsatz und sind in dieser Form auch in den Elektroden enthalten.

Sowohl die positive als auch die negative Elektrode können neben den erwähnten Aktivmaterialien noch elektrochemisch inaktive Komponenten enthalten. Hierzu zählen insbesondere Elektrodenbinder und leitfähigkeitsbeeinflussende Additive. Elektrodenbinder sind in aller Regel für die mechanische Stabilität der Elektroden verantwortlich. Da diese Funktion im Rahmen der vorliegenden Erfindung zumindest auf der Seite der positiven Elektrode von dem porösen Gebilde übernommen wird, kann in einigen Ausführungsformen der vorliegenden Erfindung auf einen Elektrodenbinder verzichtet werden. Die erwähnten leitfähigkeitsbeeinflussenden Additive sind in einigen Ausführungsformen ebenfalls nicht zwingend erforderlich, da das Gebilde eine Leitmatrix bildet, die zumindest in Teilen auch die Funktionen eines klassischen Leitmittels übernimmt. Sofern die Elektroden der erfindungsgemäßen Knopfzelle ein Leitmittel enthalten, so kommt hierfür beispielsweise Ruß oder Graphit infrage. Als Elektrodenbinder kommen beispielsweise Carboxymethylzellulose und fluorierte Polymere wie Polyvinylidenfluroride in Frage.

Als elektrisch isolierende Dichtung eignen sich für eine erfindungsgemäße Knopfzelle insbesondere klassische Spritzgussdichtungen sowie die aus der DE 196 47 593 A1 bekannten Foliendichtungen.

Als ionenleitfähiger Separator kommen für die erfindungsgemäße Knopfzelle insbesondere poröse, mit einem Elektrolyten getränkte Kunststofffolien in Frage, beispielsweise poröse Folien aus einem Polyolefin oder aus einem Polyetherketon.

Bevor das Gehäuse einer erfindungsgemäßen Knopfzelle geschlossen wird, werden die Elektroden üblicherweise mit einem Elektrolyten befüllt. Gängige Elektrolytlösungen sind zum Beispiel Lösungen von Lithiumsalzen wie Lithiumhexafluorophosphat in organischen Lösungsmitteln wie Ether oder Ester der Kohlensäure.

Die genannten und weitere Vorteile der Erfindung ergeben sich insbesondere aus der nun folgenden Beschreibung der Zeichnung in Verbindung mit dem beschriebenen Ausführungsbeispiel. Die im Folgenden beschriebenen bevorzugten Ausführungsformen dienen lediglich zur Erläuterung und zum besseren Verständnis der Erfindung und sind in keiner Weise einschränkend zu verstehen.

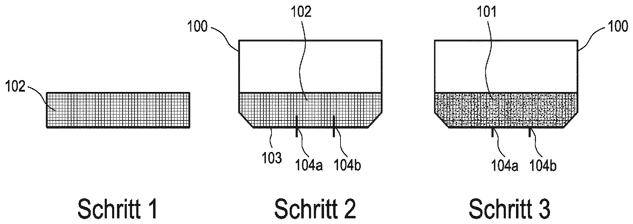

In Fig. 1 ist eine bevorzugte Vorgehensweise zur Bereitstellung eines positiv gepolten Gehäusehalbteils 100 mit einer darin enthaltenen positiven Elektrode 101 dargestellt. In Schritt 1 wird eine Scheibe 102 aus einem Aluminiumschaum (Querschnittsdarstellung) bereitgestellt. Die Scheibe 102 wird hierzu aus einem entsprechenden Bandmaterial ausgestanzt. Im Schritt 2 wird die Scheibe 102 in ein becherförmiges Gehäusehalbteil 100 aus Aluminium eingedrückt, so dass sie flach auf dem Boden 103 des Gehäusehalbteils 100 aufliegt. Auf der Außenseite des Bodens 103 werden anschließend an zwei Punkten 104a und 104b Elektroden angesetzt, an die eine elektrische Spannung angelegt wird. Bedingt durch die elektrische Spannung kommt es im Kontaktbereich zu einer Verschmelzung des Aluminiumschaums mit der Innenseite des Bodens 103. Im Schritt 3 wird eine Suspension aus N-Methylpyrrolidon (NMP) oder N-Ethylpyrrolidon (NEP) und einem darin enthaltenen Lithiummetalloxid in die Poren des Aluminiumschaums eingebracht. Das organische Lösungsmittel wird anschließend entfernt. Mittels eines Stempels (nicht dargestellt) kann der Verbund aus dem Metallschaum und dem Elektrodenaktivmaterial kalandriert werden.

Das in Schritt 3 bereitgestellte positiv gepolte Gehäusehalbteil 100 samt darin enthaltener Elektrode 101 wird in einem Folgeschritt mit einem becherförmigen negativ gepolten Gehäusehalbteil kombiniert, in das metallisches Lithium als negative Elektrode eingepresst wurde (alternativ zu dem metallischen Lithium können auch ein Material wie graphitischer Kohlenstoff oder zur Interkalation von Lithium befähigte nicht-graphitische Kohlenstoffmaterialien verwendet werden). Hierbei wird die positive Elektrode 101 mit einer Elektrolytlösung getränkt und es wird ein Polyolefinseparator zwischen der positiven und der negativen Elektrode angeordnet. Das positive Gehäusehalbteil 100 wird in das negativ gepolte Gehäusehalbteil eingeschoben. Der Verschluss des Gehäuses erfolgt durch Bördelung.

## Patentansprüche

1. Knopfzelle auf Lithium-Ionen-Basis umfassend
• ein flüssigkeitsdicht verschlossenes Gehäuse aus einem positiv gepolten metallischen Gehäusehalbteil und einem negativ gepolten metallischen Gehäusehalbteil, die mittels einer elektrisch isolierenden Dichtung voneinander getrennt sind,
• eine positive Elektrode, die innerhalb des Gehäuses angeordnet ist und in elektrischem Kontakt mit dem positiv gepolten Gehäusehalbteil steht,
• eine negative Elektrode, die innerhalb des Gehäuses angeordnet ist und in elektrischem Kontakt mit dem negativen gepolten Gehäusehalbteil steht, und
• einen ionenleitfähigen Separator, der in dem Gehäuse zwischen der positiven und der negativen Elektrode angeordnet ist,
wobei
• die positive Elektrode einen metallischen Stromableiter umfasst,
• der metallische Stromableiter ein poröses dreidimensionales Gebilde ist,
• die Poren des das poröse Gebildes mit einem elektrochemischem Aktivmaterial der positiven Elektrode befüllt sind und
• das poröse Gebilde durch Verschweißung direkt mit dem positiv gepolten Gehäusehalbteil verbunden ist.

2. Knopfzelle nach Anspruch 1, **dadurch gekennzeichnet, dass** das Gebilde aus einem offenporigen Schaum, einem Vlies, einem Gitter oder einem Netz gebildet ist.

3. Knopfzelle nach Anspruch 1 oder Anspruch 2, **dadurch gekennzeichnet, dass** das Gebilde eine Porosität im Bereich von 20 % bis 99 % aufweist.

4. Knopfzelle nach einem der vorhergehenden Ansprüche, **dadurch gekennzeichnet, dass** das poröse Gebilde die Form einer zylindrischen Scheibe aufweist.

5. Knopfzelle nach einem der vorhergehenden Ansprüche, **dadurch gekennzeichnet, dass**
• das poröse Gebilde
und/oder
• das positiv gepolte Gehäusehalbteil
aus Aluminium oder aus einer Aluminiumlegierung oder Stahl- oder Eisenblech und/oder
• das negativ gepolte Gehäusehalbteil
aus Stahl- oder Eisenblech besteht oder zumindest eine Lage aus Stahl- oder Eisenblech beinhaltet.

6. Knopfzelle nach einem der vorhergehenden Ansprüche, **dadurch gekennzeichnet, dass** das positiv und das negativ gepolte Gehäusehalbteil formschlüssig miteinander verbunden sind und es einer Deformation des negativ gepolten Gehäusehalbteils bedarf, um die beiden Gehäusehalbteile voneinander zu trennen

7. Knopfzelle nach einem der vorhergehenden Ansprüche, **dadurch gekennzeichnet, dass** die negative Elektrode einen metallischen Stromableiter umfasst.

8. Knopfzelle nach Anspruch 7, **dadurch gekennzeichnet, dass** der metallische Stromableiter für die negative Elektrode durch Verschweißung mit dem negativ gepolten Gehäusehalbteil verbunden ist.

9. Verfahren zur Herstellung einer Knopfzelle mit einem flüssigkeitsdicht verschlossenen Gehäuse, **gekennzeichnet durch** die Schritte
• Bereitstellung einer positiven Elektrode in einem positiv gepolten metallischen Gehäusehalbteil,
• Bereitstellung einer negativen Elektrode in einem negativ gepolten metallischen Gehäusehalbteil,
• Bereitstellung einer elektrisch isolierenden Dichtung
• Bereitstellung eines ionenleitfähigen Separators und
• Zusammenfügen dieser Bauteile zu der herzustellenden Knopfzelle,
**dadurch gekennzeichnet, dass**
die positive Elektrode einen metallischen Stromableiter in Form eines porösen, dreidimensionalen Gebildes umfasst, wobei die Poren des porösen Gebildes mit einem elektrochemischem Aktivmaterial der positiven Elektrode befüllt sind und das poröse Gebilde direkt mit dem positiv gepolten Gehäusehalbteil durch Verschweißung verbunden ist.

10. Verfahren nach Anspruch 9, **dadurch gekennzeichnet, dass** die Verschweißung mittels Widerstandsschweißen oder mittels eines Lasers herbeigeführt wird.

11. Verfahren nach Anspruch 9 oder Anspruch 10, **dadurch gekennzeichnet, dass** zur Herbeiführung der Verschweißung das poröse Gebilde mit dem Gehäusehalbteil in mechanischen Kontakt gebracht und die Verschweißung durch Anlegen einer Spannung an das Gehäusehalbteil im Kontaktbereich herbeigeführt wird.

12. Verfahren nach einem der Ansprüche 9 bis 11, **dadurch gekennzeichnet, dass** die positive Elektrode durch Einbringen eines geeigneten elektrochemischen Aktivmaterials in das poröse Gebilde hergestellt wird nachdem das poröse Gebilde mit dem positiven Gehäusehalbteil verschweißt wurde.

13. Verfahren nach Anspruch 12, **dadurch gekennzeichnet, dass**
• das elektrochemische Aktivmaterial trocken in das poröse Gebilde eingebracht wird
oder
• das elektrochemische Aktivmaterial in Form einer Suspension in das poröse Gebilde eingebracht wird.

## Claims

1. Button cell on a lithium-ion basis, comprising
• a housing which is sealed in a fluid-tight fashion, comprising a positively-poled metallic housing half and a negatively-poled metallic housing half, which halves are separated from one another by means of an electrically-insulating seal,
• a positive electrode, which is arranged within the housing and is in electrical contact with the positively-poled housing half,
• a negative electrode, which is arranged within the housing and is in electrical contact with the negatively-poled housing half, and
• an ion-conductive separator, which is arranged in the housing between the positive electrode and the negative electrode,
wherein
• the positive electrode comprises a metallic current collector,
• the metallic current collector is a porous three-dimensional structure,
• the pores of the porous structure are filled with an electrochemically-active material of the positive electrode, and
• the porous structure is bonded directly to the positively-poled housing half by welding.

2. Button cell according to Claim 1, **characterized in that** the structure is formed of an open-pore foam, a woven material, a grid or a mesh.

3. Button cell according to Claim 1 or Claim 2, **characterized in that** the structure has a porosity in the region of 20% to 99%.

4. Button cell according to one of the preceding claims, **characterized in that** the porous structure assumes the form of a cylindrical disk.

5. Button cell according to one of the preceding claims, **characterized in that**
• the porous structure
and/or
• the positively-poled housing half
is comprised of aluminum or an aluminum alloy, or of sheet steel or iron
and/or
• the negatively-poled housing half
is comprised of sheet steel or iron, or at least contains one layer of sheet steel or iron.

6. Button cell according to one of the preceding claims, **characterized in that** the positively- and negatively-poled housing halves are mutually interconnected in a form-fitting arrangement, wherein a deformation of the negatively-poled housing half is required in order to separate the two housing halves from one another.

7. Button cell according to one of the preceding claims, **characterized in that** the negative electrode comprises a metallic current collector.

8. Button cell according to Claim 7, **characterized in that** the metallic current collector for the negative electrode is bonded to the negatively-poled housing half by welding.

9. Method for manufacturing a button cell having a fluid-tight-sealed housing, **characterized by** the following steps:
• provision of a positive electrode in a positively-poled metallic housing half
• provision of a negative electrode in a negatively-poled metallic housing half
• provision of an electrically-insulating seal
• provision of an ion-conductive separator, and
• combination of these components in the button cell to be manufactured,
**characterized in that** the positive electrode comprises a metallic current collector in the form of a porous, three-dimensional structure, wherein the pores of the porous structure are filled with an electrochemically-active material of the positive electrode and the porous structure is bonded directly to the positively-poled housing half by welding.

10. Method according to Claim 9, **characterized in that** welding is executed by means of resistance welding, or by means of a laser.

11. Method according to Claim 9 or Claim 10, **characterized in that**, for the execution of welding, the porous structure is brought into mechanical contact with the housing half, and welding is executed by the application of a voltage to the housing half in the contact region.

12. Method according to one of Claims 9 to 11, **characterized in that** the positive electrode is manufactured by the incorporation of an appropriate electrochemically-active material into the porous structure after the porous structure has been welded to the positive housing half.

13. Method according to Claim 12, **characterized in that**
• the electrochemically-active material is incorporated in the porous structure in dry form
or
• the electrochemically-active material is incorporated in the porous structure in the form of a suspension.

## Revendications

1. Pile bouton à base d'ions de lithium, comprenant
* un boîtier fermé étanche aux liquides constitué d'une demi-partie de boîtier métallique de polarité positive et d'une demi-partie de boîtier métallique de polarité négative qui sont séparées l'une de l'autre au moyen d'une garniture d'étanchéité électriquement isolante,
* une électrode positive qui est disposée à l'intérieur du boîtier et qui se trouve en contact électrique avec la demi-partie de boîtier métallique de polarité positive,
* une électrode négative qui est disposée à l'intérieur du boîtier et qui se trouve en contact électrique avec la demi-partie de boîtier de polarité négative, et
* un séparateur conducteur d'ions qui est disposé dans le boîtier entre les électrodes positive et négative,
avec laquelle
* l'électrode positive comprend un collecteur de courant métallique,
* le collecteur de courant métallique est une structure tridimensionnelle poreuse,
* les pores de la structure poreuse sont remplis d'un matériau à activité électrochimique de l'électrode positive et
* la structure poreuse est reliée par soudage directement à la demi-partie de boîtier de polarité positive.

2. Pile bouton selon la revendication 1, **caractérisée en ce que** la structure est formée d'une mousse à pores ouverts, d'une étoffe, d'une grille ou d'un filet.

3. Pile bouton selon la revendication 1 ou la revendication 2, **caractérisée en ce que** la structure présente une porosité dans la plage de 20 % à 99 %.

4. Pile bouton selon l'une des revendications précédentes, **caractérisée en ce que** la structure poreuse présente la forme d'un disque cylindrique.

5. Pile bouton selon l'une des revendications précédentes, **caractérisée en ce que**
* la structure poreuse
et/ou
* la demi-partie de boîtier de polarité positive se compose d'aluminium ou d'un alliage d'aluminium ou de tôle d'acier ou de fer
et/ou
* la demi-partie de boîtier de polarité négative se compose de tôle d'acier ou de fer ou contient au moins une couche de tôle d'acier ou de fer.

6. Pile bouton selon l'une des revendications précédentes, **caractérisée en ce que** la demi-partie de boîtier de polarité positive et celle de polarité négative sont reliées ensemble par complémentarité de formes et une déformation de la demi-partie de boîtier de polarité négative est nécessaire pour séparer les deux demi-parties de boîtier l'une de l'autre.

7. Pile bouton selon l'une des revendications précédentes, **caractérisée en ce que** l'électrode négative comprend un collecteur de courant métallique.

8. Pile bouton selon la revendication 7, **caractérisée en ce que** le collecteur de courant métallique pour l'électrode négative est relié à la demi-partie de boîtier de polarité négative par soudage.

9. Procédé de fabrication d'une pile bouton pourvue d'un boîtier fermé étanche aux liquides, **caractérisé par** les étapes suivantes
* fourniture d'une électrode positive dans une demi-partie de boîtier métallique de polarité positive,
* fourniture d'une électrode négative dans une demi-partie de boîtier métallique de polarité négative,
* fourniture d'une garniture d'étanchéité électriquement isolante,
* fourniture d'un séparateur conducteur d'ions et
* assemblage de ces éléments structuraux en la pile bouton à fabriquer,
**caractérisé en ce que**
l'électrode positive comprend un collecteur de courant métallique sous la forme d'une structure tridimensionnelle poreuse, les pores de la structure poreuse étant remplis d'un matériau à activité électrochimique de l'électrode positive et la structure poreuse étant reliée par soudage directement à la demi-partie de boîtier de polarité positive.

10. Procédé selon la revendication 9, **caractérisé en ce que** le soudage est accompli au moyen du soudage par résistance ou au moyen d'un laser.

11. Procédé selon la revendication 9 ou la revendication 10, **caractérisé en ce que** pour accomplir le soudage, la structure poreuse est amenée en contact métallique avec la demi-partie de boîtier et le soudage est accompli en appliquant une tension à la demi-partie de boîtier dans la zone du contact.

12. Procédé selon l'une des revendications 9 à 11, **caractérisé en ce que** l'électrode positive est fabriquée en introduisant un matériau à activité électrochimique approprié dans la structure poreuse et après que la structure poreuse ait été soudée avec la demi-partie de boîtier positive.

13. Procédé selon la revendication 12, **caractérisé en ce que**
* le matériau à activité électrochimique est introduit sec dans la structure poreuse
ou
* le matériau à activité électrochimique est introduit dans la structure poreuse sous la forme d'une suspension.
